# EUROPÄISCHE PATENTANMELDUNG

(11) **EP 3 075 494 A1**
(43) Veröffentlichungstag der Anmeldung: **05.10.2016**
(21) Anmeldenummer: 16161727.9
(22) Anmeldetag: 22.03.2016
(51) Int. Cl.: B25J 9/00

(54) **ARBEITSVORRICHTUNG UND ARBEITSVERFAHREN**

(30) Priorität: 31.03.2015 DE 202015101621 U
(71) Anmelder: KUKA Systems GmbH, 86165 Augsburg (DE)
(72) Erfinder: LACHNER, Johannes, 85250 Pipinsried (DE); MAYR, Stefan, 86316 Friedberg (DE); STOCKSCHLÄDER, Julian, 86152 Augsburg (DE); ZUNKE, Richard Dr., 86150 Augsburg (DE); OEHRLEIN, Johannes, 82281 Egenhofen (DE)
(74) Vertreter: Ernicke, Klaus Stefan

(57) **Zusammenfassung**

Die Erfindung betrifft eine Arbeitsvorrichtung (1) und ein Verfahren zur Durchführung von Arbeitsprozessen mittels einer solchen Arbeitsvorrichtung (1), welche ein Traggestell (3) für einen programmierbaren Industrieroboter (2) aufweist. Das Traggestell (3) hat ein Fußteil (5) und einen galgenförmigen mehrachsig verstellbaren Ständer (4). Der Ständer (4) besitzt einen auf dem Fußteil (5) angeordneten Sockel (8), eine aufrechte Säule (10) und einen geraden oder abgewinkelten Ausleger (13) am oberen Säulenende, die beweglich und mit Stellachsen (9,11,16,17) miteinander verbunden sind.

## Beschreibung

Die Erfindung betrifft eine Arbeitsvorrichtung und ein Arbeitsverfahren mit den Merkmalen im Oberbegriff des Verfahrens- und Vorrichtungshauptanspruchs.

Aus der Praxis sind Arbeitsvorrichtungen mit einem stationären tischartigen Traggestell für einen programmierbaren Industrieroboter bekannt. Die Einsatzmöglichkeiten dieser Arbeitsvorrichtung sind begrenzt.

Es ist daher Aufgabe der vorliegenden Erfindung, eine verbesserte Arbeitsvorrichtung nebst Arbeitsverfahren aufzuzeigen.

Die Erfindung löst diese Aufgabe mit den Merkmalen im Verfahrens- und Vorrichtungshauptanspruch.

Die Arbeitsvorrichtung und das Arbeitsverfahren können zur Durchführung beliebiger Arbeitsprozesse, insbesondere zur automatisierten Bearbeitung und/oder Handhabung von Werkstücken, eingesetzt werden.

Das Traggestell der Arbeitsvorrichtung weist ein stationäres oder bewegliches, bevorzugt auf dem Untergrund verfahrbares und/oder verschraubbares, Fußteil und einen galgenförmig sowie mehrachsig verstellbar ausgebildeten Ständer auf. Am Ständer kann ein programmierbarer Industrieroboter montiert werden. Er kann durch die vielfältigen Verstellmöglichkeiten des Ständers in unterschiedliche Lagen, insbesondere in einen hängende oder stehende Lage gebracht werden. Er hat dadurch einen sehr großen Arbeitsbereich und ist hochflexibel einsetzbar. Seine Reichweite kann durch die mehrfachen Einstellmöglichkeiten des Ständers an unterschiedliche Applikationen und Aufgaben optimal angepasst werden.

Der mehrfach verstellbare Ständer hat vorzugsweise mehrere, insbesondere jeweils eine oder zwei, lineare und rotatorische Stellachsen. Vorzugsweise sind drei oder vier Stellachsen vorhanden. Die Stellachsen können manuell oder mit einem steuerbaren Stellantrieb betätigt werden. Der Ständer kann an den Stellachsen Arretiereinrichtungen und ggf. Erfassungsvorrichtungen für die Fixierung und messtechnische Erfassung der gewünschten Achsposition aufweisen. Die erfasste Achsposition kann in die Steuerung des Industrieroboters einfließen. Der Ständer kann auch eine integrierte Kabelführung im Ausleger mit Verbindung zum Industrieroboter und in der Säule mit Verbindung nach außen aufweisen.

Der schwenkbare Ausleger am Kopf der Säule hat besondere Vorteile für den erweiterten Arbeitsbereich und die Flexibilität des Industrieroboters. Er hat den weiteren Vorteil, dass der Industrieroboter zunächst stehend und damit einfacher auf dem Ausleger montiert und anschließend mit dem Ausleger in die hängende Arbeitsposition geschwenkt werden kann.

In einem eigenständigen Erfindungsgedanken ist vorgesehen, dass die Arbeitsvorrichtung eine am Traggestell bevorzugt formschlüssig andockbare Arbeitsplattform aufweist, bzw. dass die Arbeitsvorrichtung derart ausgestaltet ist, dass eine Arbeitsplattform bevorzugt formschlüssig an die Arbeitsvorrichtung andockbar ist. Insbesondere weist das Traggestell, bevorzugt sein Fussteil, eine Andockeinrichtung für das Andocken der Arbeitsplattform auf. Beim Andocken kann eine mechanische, insbesondere formschlüssige, Verbindung und ggf. eine medientechnische Verbindung zwischen dem Traggestell und der Arbeitsplattform hergestellt werden. Hierüber können Medien, z.B. elektrische Energie, Fluide oder auch Signale übertragen werden.

Dies bietet verschiedene Vorteile. Es kann für eine mechanische Stabilisierung und Beschwerung des Traggestells gesorgt werden. Hierdurch wird die tatsächliche Beanspruchung der Arbeitsplattform reduziert. Der Schwerpunkt des Traggestells wird gesenkt, was auch günstig für das Kippmoment ist. Zudem ergeben sich flexible und ergonomische Umbaumöglichkeit zwischen dem z.B. hängend am Ständer angeordneten Industrieroboter und einem ggf. zusätzlichen Industrieroboter auf der Arbeitsplattform. Außerdem bieten sich erweiterte Einsatzmöglichkeiten für die Kombination von Traggestell und Arbeitsplattform.

Das Traggestell kann leichtgewichtig und filigran ausgebildet sein. Dies ist für seine Mobilität und für eine bevorzugt manuelle Verstellung des Ständers von Vorteil. Verstellbare, insbesondere ausschwenkbare oder ausziehbare, Standfüße können die Stützlänge und die Standfestigkeit des Traggestells beim Einsatz ohne Arbeitsplattform verbessern.

Andererseits bietet die Arbeitsplattform eine bevorzugt horizontale Arbeitsoberfläche bzw. Arbeitsplatte und stellt in einem Unterbau Platz für eine zusätzliche prozesstechnische Ausrüstung, z.B. ein Klimagerät, Antriebstechnik, Werkzeuge und Prozesszubehör etc. zur Verfügung.

Das Traggestell weist ein Fußteil mit einem bevorzugt als U-förmiger Aufnahmerahmen oder als Plattform ausgebildeten Grundkörper auf. Am Grundkörper kann bedarfsweise eine Arbeitsplattform aufgenommen und angedockt werden. Auf dem Grundkörper kann der Sockel angeordnet sein. Der Sockel kann eine seitliche Versteifung, bevorzugt mit einer integrierten Schwingungsdämpfung, aufweisen.

Das Traggestell und ggf. die Arbeitsplattform sind bevorzugt ortsflexibel. Sie lassen sich mittels Laufwerken von Hand bewegen. Sie können auch mittels bevorzugt gemeinsamer Staplertaschen von einer Transportvorrichtung, z.B. einem Gabelstapler, einem Hubwagen oder dgl. transportieren werden. Hierbei weisen jeweils das Traggestell und ggf. die Arbeitsplattform Staplertaschen auf, sodass diese gemeinsam oder ggf. auch einzeln transportierbar sind. Die ortsflexible Arbeitsvorrichtung kann bedarfsweise zu stationären Arbeitsstationen, z.B. Montageinseln, gebracht und dort eingesetzt werden. Das Traggestell kann auch eine Andockvorrichtung zum Andocken an einer Montageinsel aufweisen.

Weitere Vorteile der beanspruchten Arbeitsvorrichtung liegen in der kostengünstigen und wirtschaftlichen Lösung sowie in der konstruktiven und steuertechnischen Einfachheit. Zudem ergibt sich eine höhere Flexibilität und einfachere Einbindung der Arbeitsvorrichtung in bereits bestehende Anlagen. Hierfür ist die Vielfalt der mittels der Stellachsen einstellbaren Arbeitspositionen des Industrieroboters von besonderem Vorteil.

Die beanspruchte Arbeitsvorrichtung beinhaltet zumindest das Traggestell. Sie kann zusätzlich einen oder mehrere programmierbare Industrieroboter und im weiteren gegebenenfalls auch die Arbeitsplattform umfassen.

In einer Ausführung der Arbeitsvorrichtung weist der Ständer des Traggestells einen auf dem Fußteil angeordneten Sockel, eine aufrechte Säule und einen ggf. abgewinkelten Ausleger auf, die jeweils beweglich und mit mehreren, z.B. drei oder vier, Stellachsen miteinander verbunden sind.

In einer Variante ist der Ausleger L-förmig ausgebildet, wobei ein Kippgelenk zwischen seinem aufrechten Schenkel und einem seitlichen Ansatz am oberen Ende der Säule angeordnet ist.

Das Kippgelenk kann auch entfallen. Der Ausleger kann auch als quer gerichteter und bevorzugt gerader Arm am oberen Säulenende starr oder beweglich angeordnet sein.

Eine Ausgestaltung sieht vor, der Sockel und die aufrechte Säule höhenverstellbar miteinander verbunden sind. Die Stellachse kann als manuell betätigbare oder gesteuert angetriebene Hubeinrichtung ausgebildet sein.

In einer Ausgestaltung hat die aufrechte Säule des Ständers eine um die Hochachse verdrehbare Stellachse. Die Stellachse kann von einem Drehgelenk, einer lösbaren und umsetzbaren Flanschverbindung oder auf andere Weise gebildet werden.

Der Industrieroboter ist vorzugsweise mehrachsig und taktil ausgebildet.

Der Industrieroboter hat bevorzugt mehrere beweglich miteinander verbundene Roboterglieder und mehrere translatorische und/oder rotatorische Roboterachsen (I-VII).

Der Industrieroboter kann als taktiler Roboter mit einer zugeordneten, bevorzugt integrierten, Sensorik zur Erfassung von außen einwirkenden mechanischen Belastungen, insbesondere Kräften und/oder Momenten, ausgebildet sein.

Ein taktiler Industrieroboter kann insbesondere eine integrierte Sensorik mit Sensoren, insbesondere Momentensensoren und ggf. Weg- oder Positionssensoren, an den vorzugsweise rotatorischen Roboterachsen (I-VII) aufweisen.

Ein taktiler Industrieroboter kann eine oder mehrere kraftgesteuerte oder kraftgeregelte Roboterachsen (I-VII) aufweisen.

Bevorzugt hat ein taktiler Industrieroboter mindestens eine nachgiebige Roboterachse (I-VII) mit einer Nachgiebigkeitsregelung, insbesondere einer reinen Kraftregelung oder einer kombinierten Kraft- und Positionsregelung.

Der bevorzugt taktile Industrieroboter kann für eine Mensch-Roboter-Kooperation oder Kollaboration (MRK) vorgesehen und ausgebildet sein.

Die Arretiereinrichtung(en) und/oder Erfassungseinrichtung(en) kann/können mit einer Robotersteuerung des Industrieroboters verbunden sein.

In den Unteransprüchen sind weitere vorteilhafte Ausgestaltungen der Erfindung angegeben.

Die Erfindung ist in den Zeichnungen beispielsweise und schematisch dargestellt. Es zeigen:
- Figur 1 und 2:: eine Seitenansicht und eine perspektivische Ansicht einer Arbeitsvorrichtung mit einem Traggestell, einem Industrieroboter und einer Arbeitsplattform,
- Figur 3 und 4:: eine Seitenansicht und eine perspektivische Ansicht des Traggestells von Figur 1 und 2 ohne Industrieroboter und ohne Arbeitsplattform,
- Figur 5 bis 7:: verschiedene Betriebsstellungen der Arbeitsvorrichtung in Seitenansicht,
- Figur 8:: einen mehrachsigen taktilen Industrieroboter und
- Figur 9 und 10:: Varianten der Arbeitsvorrichtung.

Die Erfindung betrifft eine Arbeitsvorrichtung (1) und ein Arbeitsverfahren zur automatisierten Bearbeitung und/oder Handhabung von Werkstücken (nicht dargestellt).

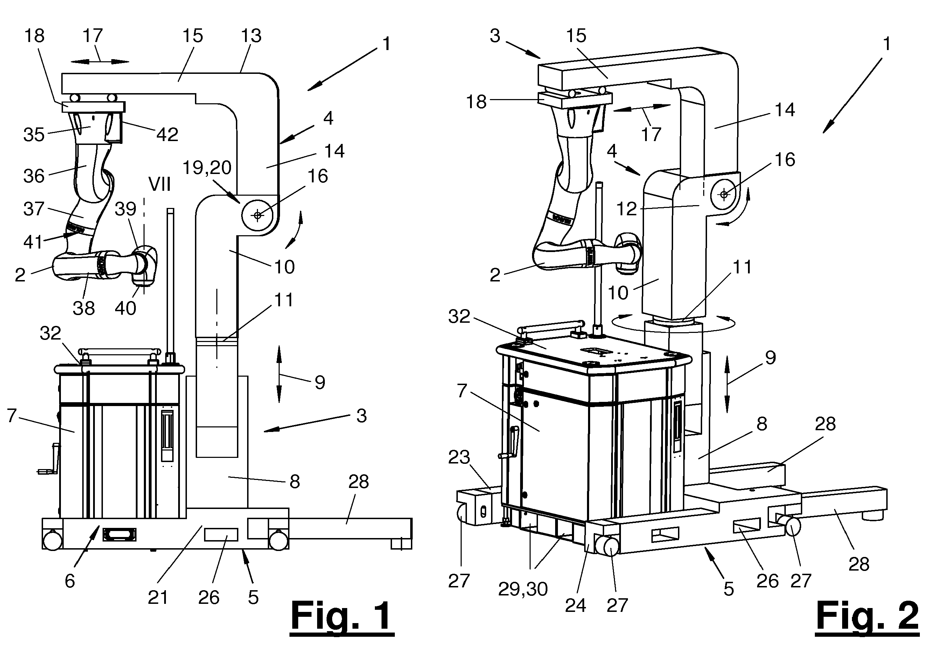

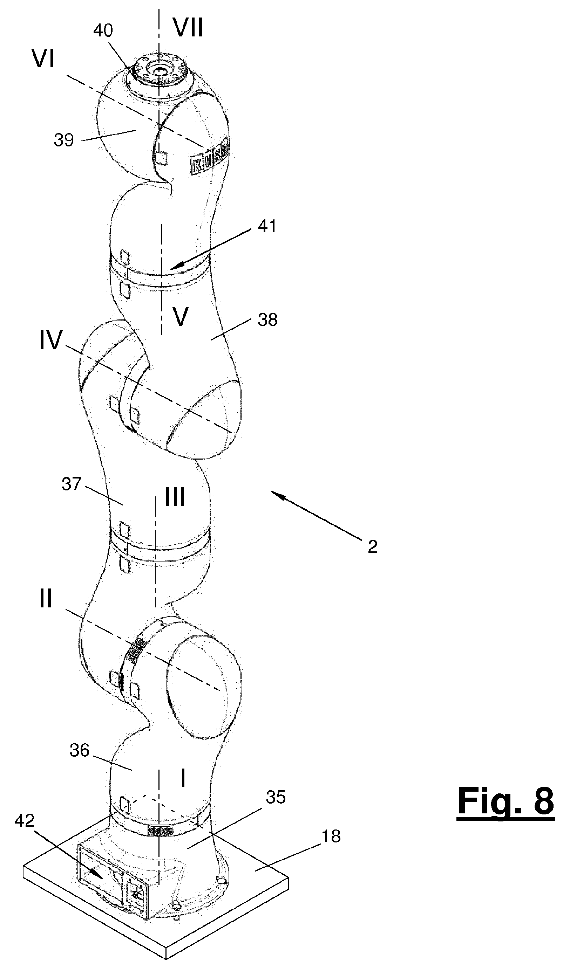

Die Arbeitsvorrichtung (1) beinhaltet vorzugsweise zumindest ein Traggestell (3), welches zur Aufnahme eines programmierbaren Industrieroboters (2) vorgesehen und ausgebildet ist. Die Arbeitsvorrichtung (1) kann auch den Industrieroboter (2) umfassen. Dieser ist gemäß Figur 8 bevorzugt mehrachsig sowie taktil ausgebildet und mit einer Robotersteuerung (42) versehen. Ferner kann die Arbeitsvorrichtung (1) eine Arbeitsplattform (7) beinhalten, die am Traggestell (3) angedockt werden kann. Figur 1 und 2 zeigen die vollausgerüstete Arbeitsvorrichtung (1). Ferner ist eine umgekehrte Gestaltung der Arbeitsvorrichtung (1) möglich, wobei diese zumindest eine Arbeitsplattform (7) der nachstehend beschriebenen Art und zusätzlich ein Traggestell (3) aufweist.

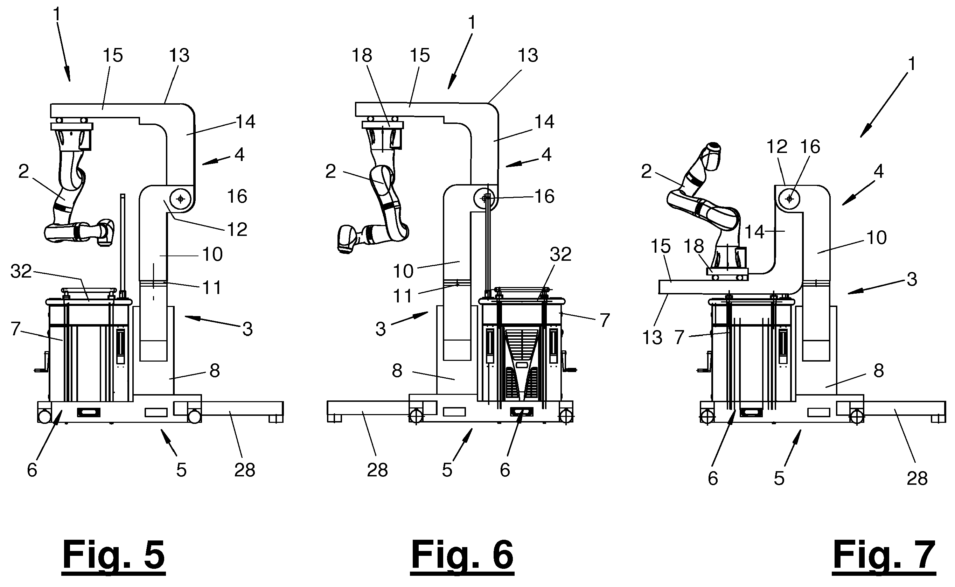

Gemäß Figur 1 bis 4 weist das Traggestell (3) ein Fußteil (5) und einen Ständer (4) auf. Der Ständer (4) ist bevorzugt galgenförmig bzw. L-förmig abgewinkelt und mehrachsig verstellbar ausgebildet. Der Ständer (4) besitzt einen Anschluss (18) für die Montage des Industrieroboters (2). Bei einem ausgeklappten Zustand des Ständers (4) gemäß Figur 1 bis 6 kann der Industrieroboter (2) hängend montiert werden. Im ausgeklappten Zustand gemäß Figur 7 ist eine stehende Montage möglich. Das Traggestell (3) ist vorzugsweise mobil ausgebildet und kann auf dem Untergrund verfahren und in der gewünschten Position fixiert werden.

Der mehrfach verstellbare Ständer (4) hat mehrere Stellachsen (9,11,16,17). Dies können lineare und rotatorische Stellachsen (9,11,16,17) sein. Im gezeigten Ausführungsbeispiel sind vier Stellachsen vorhanden, die sich in zwei lineare Stellachsen (9,17) und zwei rotatorische Stellachsen (11,16) aufteilen. Die Achsenzahl kann alternativ kleiner öder größer sein.

Die Stellachsen (9,11,16,17) können bevorzugt manuell betätigt werden. Ein oder mehrere Stellachsen (9,11,16,17) können alternativ einen steuerbaren Stellantrieb aufweisen. Dieser kann mit der Robotersteuerung (42) des programmierbaren Industrieroboters (2) verbunden sein.

Eine oder mehrere Stellachsen (9,11,16,17) können eine Arretiereinrichtung (19) aufweisen, mit der die eingestellte lineare und/oder rotatorische Achsposition bedarfsweise fixiert werden kann. Die Arretiereinrichtung (19) kann für eine manuelle Betätigung vorgesehen und ausgebildet sein. Sie kann alternativ einen steuerbaren Arretierantrieb aufweisen. Zudem können eine oder mehrere Stellachsen (9,11,16,17) eine Erfassungseinrichtung (20) für die Achsposition aufweisen. Die Arretiereinrichtung(en) (19) und/oder Erfassungseinrichtung(en) (20) können ebenfalls mit der Robotersteuerung (42) verbundenen sein.

Wie Figur 1 bis 4 verdeutlichen, weist der Ständer (4) einen auf dem Fußteil (5) angeordneten Sockel (8), eine aufrechte Säule (10) und einen L-förmig abgewinkelten Ausleger (13) am oberen Säulenende auf, die jeweils beweglich und mit Stellachsen (9,11,16,17) miteinander verbunden sind.

Die Ständerteile (8,10,13) können als offene oder geschlossene, bevorzugt metallische Profile, insbesondere Hohlprofile, ausgebildet sein und einen prismatischen oder runden Querschnitt haben. In der gezeigten Ausführungsform sind sie als hohle Kastenprofile aus Stahl mit einem rechteckigen Querschnitt gestaltet.

Die Stellachsen (9,11,16,17) sind bevorzugt einzeln und unabhängig voneinander betätigbar, so dass sich eine Vielzahl von Einstellungsmöglichkeiten für den Ständer (4) und für die hierdurch bewirkte Roboterposition ergeben. Für die Ausbildung der Ständerteile und für die Stellachsen (9,11,16,17) bestehen verschiedene Möglichkeiten.

In den gezeigten Ausführungsbeispielen sind der Sockel (8) und die aufrechte Säule (10) höhenverstellbar miteinander verbunden. Die Stellachse (9) ist dabei als Hubeinrichtung ausgebildet, mit der die Säule (10) gegenüber dem Sockel (8) in Stufen oder stufenlos gehoben und gesenkt werden kann. Die Stellachse bzw. Hubeinrichtung (9) kann wahlweise manuell betätigt werden oder mit einem steuerbaren Stellantrieb versehen sein. Die Hubeinrichtung (9) ist bevorzugt hydraulisch ausgebildet. Hierüber ist eine komfortable und ggf. rastfreie Höhenverstellung und auch eine Arretierung der gewünschten Hubposition möglich. Ein Steuerantrieb kann mit der Robotersteuerung (42) verbunden sein.

Die aufrechte Säule (10) weist eine um die Hochachse bzw. die vertikale Raumachse (z) verdrehbare rotatorische Stellachse (11) auf. Hierfür gibt es verschiedene Ausführungsmöglichkeiten. In den gezeigten Ausführungsformen ist die aufrechte Säule (10) geteilt ausgebildet, wobei zwischen den Säulenteilen ein Drehgelenk oder Drehlager angeordnet ist, welches die Stellachse (11) bildet. Die Trennstelle und die Stellachse (11) befinden sich etwa im mittleren Säulenbereich und sind oberhalb des Sockels (8) bzw. der Hubeinrichtung (9) angeordnet. In einer anderen Ausführungsform kann die Säule (10) ungeteilt ausgeführt sein, wobei die Stellachse (11) auf andere Weise, z.B. durch eine Drehlagerung in der Hubeinrichtung (9) oder durch ein Drehlager zwischen dem Sockel (8) und dem Fußteil (5), gebildet wird.

Die aufrechte Säule (10) und der Ausleger (13) sind um eine Querachse schwenkbar miteinander verbunden. Die Stellachse (16) ist hierbei als Kippgelenk ausgebildet. Die Querachse verläuft vorzugsweise horizontal, kann alternativ aber auch schräg ausgerichtet sein. Am Ausleger (13), vorzugsweise an dessen freiem Endbereich, ist der Anschluss (18) zur Montage des Industrieroboters (2) angeordnet. Über eine Schwenkbewegung des Auslegers (13) kann der Industrieroboter (2) eine hängende oder stehende Betriebslage einnehmen.

In den gezeigten Ausführungsbeispielen ist der Ausleger L-förmig ausgebildet und weist einen aufrechten Schenkel (14) und einen liegenden, insbesondere horizontalen Schenkel (15) auf. Das Kippgelenk (16) ist zwischen dem unteren Ende des aufrechten Schenkels (14) und einem seitlich vorstehenden Ansatz (12) am oberen Ende der Säule (10) angeordnet. Hierdurch verlaufen die vertikalen Zentralachsen der Säule (10) und des aufrechten Schenkels (14) parallel zueinander.

Der Ausleger (13) kann über das Kippgelenk (16) vorzugsweise um 180° schwenken. Er kann dadurch die in Figur 5 bis 7 gezeigten Betriebslagen mit hängender oder stehender Roboteranordnung einnehmen. In der oberen Betriebslage distanziert der aufrecht stehende Schenkel (14) den liegenden Schenkel (15) und den daran hängend montierten Industrieroboter (2) vom Säulenende nach oben. In der anderen unteren Betriebslage mit aufrecht hängendem Schenkel (14) sind der liegende Schenkel (15) und der Industrieroboter (2) vom Säulenende nach unten abgesenkt. Figur 5 und 6 verdeutlichen außerdem bei gleicher Auslegerstellung zwei verschiedene Drehstellungen der aufrechten Säule (10) um die Stellachse (11).

Der Ausleger (13) weist ferner einen liegenden Schenkel (15) auf, der am freien Ende eine lineare Stellachse (17), z.B. eine Schlittenführung, für den Anschluss (18) aufweist. Hierüber kann der Industrieroboter (2) längs des liegenden Schenkels (15) verfahren werden. Dies ist in beiden Betriebslagen des Auslegers (13) möglich. Die Stellachse (17) ist bevorzugt horizontal ausgerichtet.

In einer anderen und nicht dargestellten Ausführungsform kann der Ausleger (13) eine gerade, balkenartige Form haben und nur den liegenden Schenkel (15) besitzen. In diesem Fall kann auf den seitlich vorspringenden Ansatz (12) verzichtet werden, wobei die rotatorische Stellachse (16) zentral am oberen Säulenende angeordnet ist.

Die rotatorische Stellachse (11) bzw. das Drehgelenk kann einen Drehwinkel von mindestens 180°, vorzugsweise 270° oder mehr aufweisen. Die rotatorische Stellachse (16) bzw. das Kippgelenk kann den gezeigten Schwenkwinkel von 180° haben. Der Schwenkwinkel kann alternativ kleiner oder größer sein, insbesondere bei einer anderen geometrischen Auslegerform.

In einer nicht dargestellten Ausführung weist der liegende Schenkel (15) eine weitere Drehachse auf, wodurch eine weitere vorteilhafte Positionierung und/oder Ausrichtung, des an dem Anschluss (18) anbringbaren/anordenbaren Industriebroboters, ermöglicht wird. Diese Drehachse kann vorteilhaft im Wesentlichen parallel oder senkrecht zur Achse des Kippgelenks (16) ausgerichtet sein.

Die Arretiereinrichtungen (19) der rotatorischen Stellachsen (11,16) und ggf. der translatorischen Stellachsen (9,17) können z.B. über mechanische und formschlüssige Rastverbindungen an Lagerflanschen oder Schlittenführungen geschaffen werden. Eine rotatorische und/oder translatorische Verstellung ist alternativ ohne Rastung möglich. Die Arretierung kann formschlüssig und/oder kraftschlüssig erfolgen. Ein evtl. gewünschter Dreh- oder Fahrwiderstand kann durch Reibung im Gelenk bzw. in der Lagerung geschaffen werden. Beim Kippgelenk (16) kann eine Kompensation des Robotergewichts erfolgen, z.B. durch eine Gegenkraft mittels Gegengewicht, Feder oder dgl..

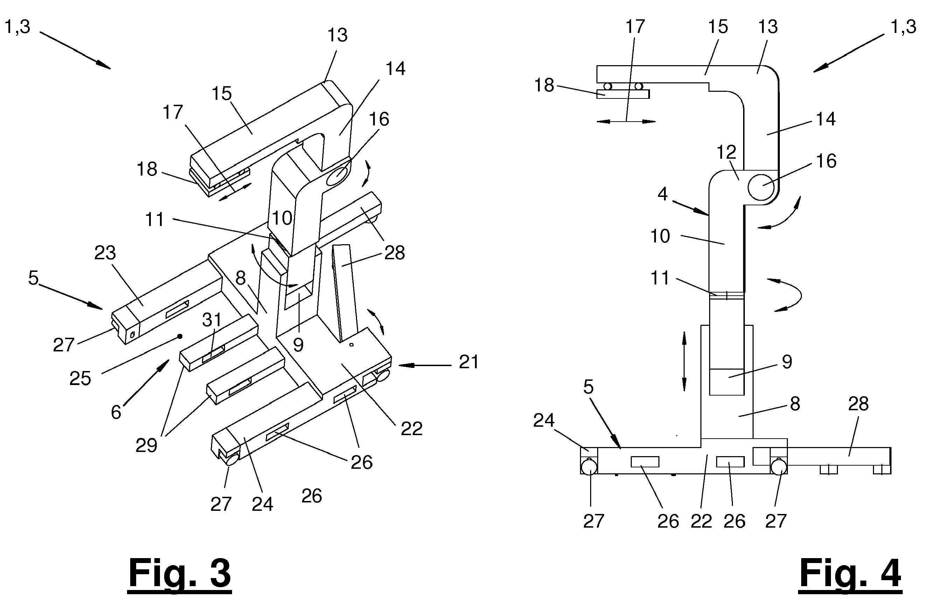

Die Arbeitsvorrichtung (1), insbesondere das Fußteil (5) weist eine Andockeinrichtung (6) auf, die für eine bevorzugt formschlüssige Aufnahme der Arbeitsplattform (7) ausgebildet ist. Das Fußteil (5) besitzt einen Grundkörper (21), der in der Draufsicht gemäß Figur 3 vorzugsweise eine U-Form aufweist. Er besteht aus einer Basis (22) und zwei damit verbundenen, quer abstehenden, parallelen Armen (23,24), die zwischen sich einen Aufnahmeraum (25) für die Arbeitsplattform (7) bilden. Der Grundkörper (21) bildet einen U-förmigen Aufnahmerahmen.

Die Andockeinrichtung (6) kann eine mechanische Verbindung zur Arbeitsplattform (7) herstellen. Beim Andocken können ggf. auch Medien, z.B. elektrische Energie, Fluide oder auch Signale übertragen werden. Hierfür kann eine Medienkupplung oder sonstige Medienverbindung vorhanden sein. Die Arbeitsvorrichtung (1), insbesondere das Traggestell (3) kann auch eine Andockeinrichtung zur zumindest mechanischen Verbindung und ggf. Positionierung an einer externen Einrichtung, z.B. einer Montageinsel, aufweisen.

Die Andockeinrichtung (6) weist z.B. Schnittstellen (29,30) am Traggestell (3) und an der Arbeitsplattform (7) auf. Gestellseitig sind z.B. zwei von der Basis (22) in den Aufnahmeraum (25) ragende gerade Anschlussarme als Schnittstelle (29) ausgebildet. Die Arbeitsplattform (7) weist zwei entsprechende bodenseitige Anschlussöffnungen (30) als Schnittstelle auf. Die Anschlussarme (29) erstrecken sich parallel zueinander und zu den äußeren Armen (23,24). Eine gegenseitige Fixierung von Traggestell (3) und Arbeitsplattform (7) ist auf beliebige Weise möglich, z.B. durch Absenken der Arbeitsplattform (7) und kraftschlüssigen und/oder formschlüssigen Kontakt der Schnittstellen (29,30).

In den Armen (23,24,29) sind axial fluchtende horizontale Durchgangsöffnungen zur Bildung von Staplertaschen (26,31) vorhanden. Die Arbeitsplattform (7) weist an ihrer Schnittstelle (30) entsprechende Staplertaschen (nicht dargestellt) auf. Ferner ist auch in der Basis (22) eine entsprechende Staplertasche (26) parallel angeordnet. Hier kann die Hubgabel eines Gabelstaplers, Hubwagens oder dgl. einfahren. Die Staplertaschen (26,31) können mit einem durchgesteckten Führungselement auch zur gegenseitigen Positionierung des Traggestells (3) und der Arbeitsplattform (7) benutzt werden.

Der Sockel (8) ist auf dem Grundkörper (21), insbesondere der Basis (22), starr oder beweglich angeordnet. Das Fußteil (5) weist ferner einen oder mehrere vorzugsweise verstellbare Standfüße (28) auf. Diese sind z.B. an der Rückseite des Grundkörpers (21) bzw. der Basis (22) angeordnet. Sie bestehen z.B. aus Tragarmen mit verstellbaren Fußstützen. Sie können um vertikale Achsen schwenkbar gelagert sein und in der Betriebsstellung fixiert werden. Zusammen mit den Armen (23,24) bilden sie in Ausschenkstellung einen stabilen H-förmigen Grundkörper (21).

Das Fußteil (5) kann ein Laufwerk (27) aufweisen, mit dem das Traggestell (3) bedarfsweise auf dem Untergrund verfahren werden kann. Das Laufwerk (27) wird z.B. von mehreren höhenverstellbaren Laufrollen gebildet, die am Grundkörper (21) an verschiedenen Stellen angeordnet sind. Laufrollen befinden sich z.B. gemäß Figur 1 bis 4 an den Enden der Arme (23,24) und an der Rückseite der Basis (22). Ein Teil der Laufrollen kann als Lenkrollen ausgebildet sein. Das Laufwerk (27) kann alternativ anders ausgebildet sein, z.B. als Gleitlagerung, Luftkissen oder dgl..

Die Arbeitsplattform (7) ist in Figur 1 und 2 sowie Figur 5 bis 7 dargestellt. Sie weist eine oben liegende Arbeitsfläche, insbesondere eine obere Arbeitsplatte (32) und einen Unterbau (33) auf. Dieser kann ggf. eine Ausrüstung (34) zur Prozessunterstützung aufnehmen. Die Ausrüstung (34) kann z.B. aus einem Klimagerät, Antriebstechnik, Messtechnik, Werkzeugen, Hilfsmitteln oder dgl. bestehen. Der kastenförmige Unterbau (33) weist zudem den vorerwähnten Boden mit der Schnittstelle (30) auf. Die Arbeitsplattform (7) kann ebenfalls ein Laufwerk mit höhenverstellbaren oder ggf. arretierbaren Laufrollen aufweisen.

An der Arbeitsplattform (7), insbesondere auf der Arbeitsplatte (32), kann eine Leuchtsäule zur Visualisierung des Maschinenzustands und ggf. auch als Träger für ein Bedientableau des Industrieroboters (2) angeordnet sein. Ferner kann sich hier ein Bediengriff befinden.

An der Arbeitsplattform (7), insbesondere auf der Arbeitsplatte (32), können auch eine Hilfvorrichtung, z.B. eine Positionier- und Spanneinrichtung für ein Werkstück, und/oder ein programmierbarer Industrieroboter (nicht dargestellt) angeordnet sein.

Figur 5 zeigt eine Betriebsstellung der Arbeitsvorrichtung (1) mit einem stehenden L-förmigen Ausleger (13), an dessen Anschluss (18) der Industrieroboter (2) hängend und über der Arbeitsplatte (32) der angedockten Arbeitsvorrichtung (7) angeordnet ist.

Figur 6 zeigt eine Betriebsstellung, in der die Säule (10) mit dem Ausleger (13) um 180° um die Stellachse (11) gedreht ist. Der hängend angeordnete Industrieroboter (2) befindet sich dabei an der Rückseite des Grundkörpers (21) über den Standfüßen (28). In dieser Betriebsstellung kann der Industrieroboter (2) z.B. ein Werkstück aufnehmen, dass mit einem Fördermittel in den rückwärtigen Freiraum zwischen den Standfüßen (28) gebracht wird. Mit einer anschließenden Rückdrehung der Säule (10) kann der Industrieroboter (2) mit dem Werkstück in eine Arbeitsposition über der Arbeitsplattform (7) gebracht werden. Solche Vorgänge sind z.B. für Montage- oder Assemblingaufgaben möglich.

Figur 7 zeigt eine Betriebsstellung mit abgeschwenktem L-förmigem Ausleger (13). In dieser Schwenkstellung liegt der aufrechte Schenkel (14) dank des seitlich versetzten Kipplagers (16) an der Säule (10) an. Dies kann eine Anschlagstellung sein. Andererseits kann der horizontale Schenkel (15) auf der Arbeitsplatte (32) der Arbeitsplattform (7) aufliegen. Letztere kann höhenverstellbar sein.

Der Industrieroboter (2) kann in beliebiger Weise am Anschluss (18) des Traggestells (3) montiert werden. Aus ergonomischen und technischen Gründen ist eine stehende Montage günstig. Hierfür kann der abgewinkelt Ausleger (13) z.B. gemäß Figur 7 in die abgeschwenkte Stellung gebracht werden, in der eine stehende Robotermontage auf dem nach oben weisenden Anschluss (18) möglich ist.

Der Industrieroboter (2) kann dabei in beliebig geeigneter Weise zugeführt werden. Dies kann z.B. über die Arbeitsplattform (7) geschehen. Der hierauf befindliche Industrieroboter (2) kann auf das Traggestell (3) und den Anschluss (18) umgesetzt und anschließend in der gezeigten abgeschwenkten oder in der hochgeschwenkten Betriebslage gemäß Figur 5 betrieben werden. Ferner ist es möglich, die Arbeitsvorrichtung (1) mit mehreren Industrierobotern (2) auszurüsten, die ggf. für die Durchführung des oder der Prozesse kooperieren. Hierbei kann z.B. jeweils ein Industrieroboter (2) in der vorbeschriebenen Weise am Traggestell (3) und ein Industrieroboter (2) an oder auf der Arbeitsplattform (7) angeordnet sein.

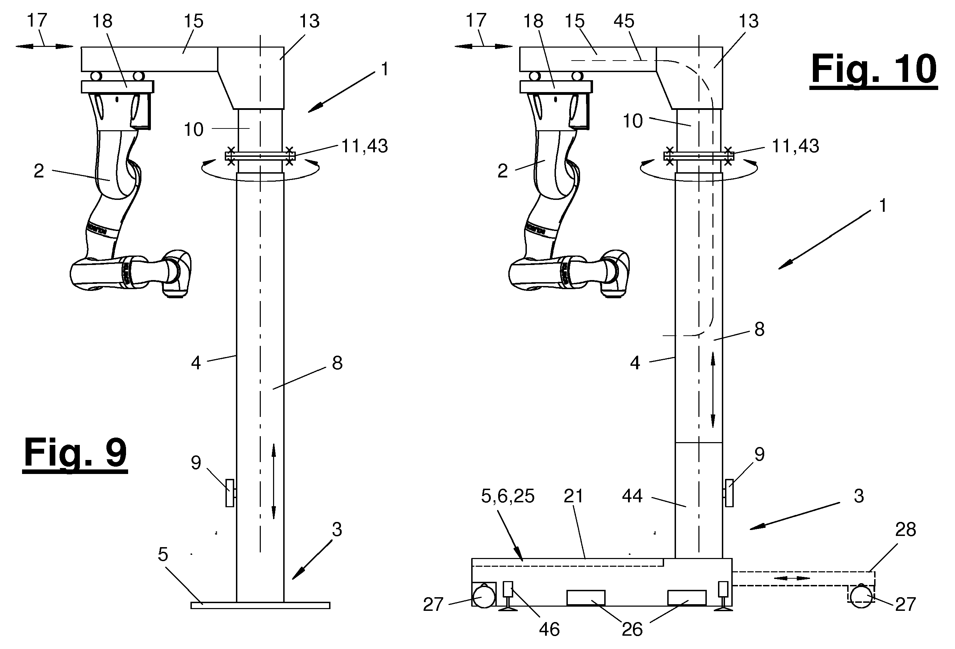

Figur 9 und 10 zeigen Varianten der Arbeitsvorrichtung (1) und insbesondere des Traggestells (3). In beiden Varianten hat das Traggestell (3) drei Stellachsen (9,11,17). Dies sind die Linearachse (9) für die Höhenverstellung der Säulen (10), die Linearachse (17) für die Verstellung des Anschlusses (18) und die rotatorische Stellachse (11) für die Verdrehung der Säule (10) um ihre Längsachse. Die Stell- oder Kippachse (16) fehlt in diesen Ausführungsbeispielen. Die Säule (10) ist am oberen Ende starr mit dem bevorzugt geraden und balkenförmigen Ausleger (13) verbunden. In Abwandlung der gezeigten Ausführungsformen kann die Linearachse (17) auch durch eine lineare Verstellung des Auslegers (13) relativ zur Säule (10) gebildet werden.

Der Sockel (8) ist in den Varianten von Figur 9 und 10 als hülsenartige Führung für die Säule (10) ausgebildet. Es wäre ebenso möglich die Säule (10) als hülsenartige Führung für den Sockel (8) auszubilden. Die Höhenverstellung der Säule (10) kann durch eine manuelle Betätigung über ein gezeigtes Handrad oder in anderer geeigneter Weise erfolgen.

Die rotatorische Achse (11) wird in beiden Ausführungsvarianten durch eine lösbare und umsetzbare Flanschverbindung (43) gebildet. Durch Lösen der Verbindung, insbesondere Verschraubung, kann der obere Teil der geteilten Säule (10) mit dem Ausleger (13) und dem oberen Flansch abgehoben, um die Säulenlängsachse gedreht und wieder aufgesetzt und verbunden werden. Die Verdrehung kann z.B. in 90°-Schritten erfolgen.

Figur 9 zeigt eine besondere einfache Ausführungsform des Traggestells (3). Das Fußteil (5) ist in dieser Variante als einfache Fußplatte ausgebildet, die starr mit dem Sockel (8) verbunden ist und die am Untergrund in geeigneter Weise befestigt wird, z.B. durch Schrauben. Eine Arbeitsplattform (7) ist in diesem Ausführungsbeispiel nicht dargestellt. Sie kann bedarfsweise beigestellt oder auch durch eine am Sockel (8) oder am Fußteil (5) befindliche Andockeinrichtung (6) angedockt werden.

Figur 10 zeigt eine Variante des Traggestells (3), bei der das Fußteil (5) ein Fahrwerk (27) aufweist. Es kann auch ein oder mehrere Standfüße (28) aufweisen, die z.B. ausziehbar am Grundkörper (21) des Fußteils (5) angeordnet sind. Ein Teil der Laufrollen des Laufwerks (27) kann an dem oder den Standfüßen (28) angeordnet sein. Die Laufrollen des Laufwerks (27) können höhenverstellbar sein.

Eine Abstützung des Fußteils mit Höhen- und Neigungsausgleich kann über mehrere verteilt angeordnete Stützelemente (46) erfolgen, die im Betrieb das Traggestell (3) standsicher am Untergrund abstützen, wobei die Laufrollen eingezogen werden können. Der Einzug der Laufrollen kann sensorisch erfasst werden. Diese Ausführungsform kann auch bei den ersten Ausführungsbeispielen von Figur 1 bis 7 eingesetzt werden.

Der Grundkörper (21) ist in der Variante von Figur 10 als Plattform ausgebildet. Er kann bedarfsweise eine Arbeitsplattform (7) (nicht dargestellt) aufnehmen und tragen, wofür an der Oberseite des Grundkörpers (21) ein ggf. vertiefter Aufnahmeraum (25) vorhanden sein kann. Die Andockeinrichtung (6) ist am Grundkörper (21) ausgebildet und kann eine mechanische Verbindung und Positionierung durch Formschluss über den abgesenkten Aufnahmeraum (25) und ggf. eine anbaubare Verriegelungsplatte herstellen. Bedarfsweise kann auch eine medientechnische Verbindung wie in den anderen Ausführungsbeispielen hergestellt werden.

Bei der Variante von Figur 10 ist der Sockel (8) ebenfalls auf dem Grundkörper (21) angeordnet. An der Verbindungsstelle kann eine Versteifung (44) angeordnet sein, die z.B. aus schräg ausgestellten und beidseits am Sockel (8) angreifenden Stützarmen besteht. Die Stützarme können den Sockel (8) und die Säule (10) zusätzlich stabilisieren und auch eine Schwingungsfestigkeit herstellen. In den Stützarmen kann ein Dämpfungsmittel angebracht sein, um auch eine Dämpfwirkung bei eventuell in Betrieb auftretenden Schwingungen zu erreichen.

Figur 10 verdeutlicht außerdem die Anordnung einer internen Kabelführung (45) im Traggestell (3). Hierbei kann z.B. eine Kabelverbindung vom Anschluss (18) aus durch den Ausleger (13) in die Säule (10) innerhalb der vorzugsweise als Hohlprofile ausgebildeten Teile geführt sein. Die Kabelführung (45) kann an der Säule (10) oder ggf. auch am Sockel (8) an einer geeigneten Stelle wieder nach außen treten. Hier kann eine Anschluss- oder Schnittstelle vorhanden sein. Diese kann eine Medienverbindung nach außen und ggf. zu einer Arbeitsplattform (7) herstellen. Sie kann Bestandteil der besagten Andockeinrichtung (6) sein. Die Kabelführung (45) kann hierbei im vertikalen oder horizontalen Bereich des Auslegers (13) beginnen.

Der Grundkörper (21) distanziert in der Variante von Figur 10 eine eventuell aufgenommene Arbeitsplattform (7) vom Untergrund. Die Arbeitsplattform (7) kann zusammen mit dem Traggestell (3) bedarfsweise bewegt und transportiert werden, z.B. über das abgesenkte Laufwerk (27) oder über Staplertaschen (26). Diese befinden sich in der gezeigten Variante im Grundkörper (21). Sie können quer zueinander ausgerichtet sein.

Mit der vorbeschriebenen Arbeitsvorrichtung (1) können unterschiedlichste Prozesse mit einer beliebigen Zahl und Ausbildung von Werkstücken durchgeführt werden. Dies können z.B. Handlingprozesse, insbesondere Montage- oder Assemblierprozesse sein. Alternativ oder zusätzlich können beliebige Bearbeitungsprozesse durchgeführt werden. Dies können Fügeprozesse für stoffliche Verbindungen mittels Schweißen, Kleben, Löten oder dgl. oder für kraft- oder formschlüssige Verbindungen durch Umformen, insbesondere Bördeln, Clinchen oder dgl. sein. Ein Bearbeitungsprozess kann auch eine spanende Bearbeitung, einen Umformprozess, einen Auftrageprozess oder dgl. beinhalten.

Die Werkstückzuführung kann in beliebig geeigneter Weise erfolgen. Die Arbeitsvorrichtung (1) kann z.B. an einer stationären Montageinsel (nicht dargestellt) positioniert und fixiert werden, wobei in der Nachbarschaft zur Arbeitsvorrichtung (1) eine Werkstückzuführung und eine Abgabestelle angeordnet sind. Hier kann sich der entsprechend geteachte Industrieroboter (2) ein oder mehrere Werkstücke abholen und vor Ort oder auf der Arbeitsplattform (7) einem Prozess unterwerfen und anschließend wieder an der Montageinsel abgeben.

Der in Figur 8 vergrößert und in einer Streckstellung dargestellte programmierbare Industrieroboter (2) weist mehrere Roboterglieder (35-39) sowie mehrere Roboterachsen (I-VII) auf. Der programmierbare Industrieroboter (2) ist mit einer vorzugsweise angebauten Robotersteuerung (42) versehen. Er weist an seinem Abtriebsglied (39) ein Abtriebselement (40) auf, das sich um eine Abtriebsachse dreht, welche zugleich die letzte Roboterachse (VII) darstellt. Am Abtriebselement (40) kann ein Prozesswerkzeug (nicht dargestellt) fest oder lösbar montiert. Dies kann eine direkte oder mittelbare Verbindung sein. Bei einer mittelbaren Verbindung kann eine automatische Wechselkupplung zwischen dem Abtriebselement (40) und dem Prozesswerkzeug angeordnet sein. Die Wechselkupplung kann auch als Medienkupplung ausgebildet sein und Betriebsmittel, z.B. elektrische Leistungs- und Signalströme, Fluide oder dgl., vom Industrieroboter (2) zum Prozesswerkzeug übertragen.

Der Industrieroboter (2) ist bevorzugt taktil ausgebildet und besitzt sensitive Fähigkeiten. Dem Industrieroboter (2) ist hierfür eine Sensorik (41) zugeordnet, mit der von außen einwirkende mechanische Belastungen, insbesondere Kräfte und/oder Momente, erfasst werden können. Dies können insbesondere die vom Prozess zurückwirkenden Reaktionskräfte oder -momente sein. Der Industrieroboter (2) erhält über die Sensorik (41) taktile Eigenschaften und sensitive Fähigkeiten. Diese können zum Suchen der Prozessstelle, zum dortigen Positionieren des Prozesswerkzeugs und bei der Ausführung des Prozesses eingesetzt werden.

Der Industrieroboter (2) weist mehrere, z.B. drei, vier oder mehr, bewegliche und miteinander verbundene Roboterglieder (35-39) auf. Er hat ferner mehrere, z.B. fünf, sechs, sieben oder mehr, angetriebene Roboterachsen (I-VII). Diese können rotatorisch und/oder translatorisch sein und in beliebiger Zahl und Konfiguration vorliegen. Die Roboterglieder (35-39) sind vorzugsweise gelenkig und über drehende Roboterachsen (I-VII) miteinander und mit einem Untergrund verbunden. Der Sockel (35) kann einen Anschluss für Betriebsmittel haben und kann ggf. die Robotersteuerung (42) aufnehmen. Es ist ferner möglich, dass einzelne Roboterglieder (37,38) mehrteilig und in sich beweglich, insbesondere um die Längsachse verdrehbar, ausgebildet sind. Durch ein ggf. hohles Abtriebselement (40) und ggf. andere Roboterglieder (35-39) können eine oder mehrere Leitungen für die besagten Betriebsmittel geführt sein und am Abtriebselement (40) nach außen treten sowie zum Prozesswerkzeug geführt sein, ggf. über eine Medienkupplung.

Im gezeigten Ausführungsbeispiel ist der Industrieroboter (2) als Gelenkarm- oder Knickarmroboter ausgebildet und weist sieben angetriebene Roboterachsen bzw. Bewegungsachsen (I-VII) auf. Die Roboterachsen (I-VII) sind mit der Robotersteuerung (42) verbunden und können gesteuert und ggf. geregelt werden. Der Industrieroboter (2) hat vorzugsweise eine oder mehrere kraftgesteuerte oder kraftgeregelte Roboterachsen (I - VII).

Der Industrieroboter (2) weist ein mit einem Anschluss (18) über den Sockel (35) verbundenes Basisglied (36) und das vorerwähnte Endglied (39) sowie zwei mehrteilige und in sich mittels Achsen (III) und (V) verdrehbare Zwischenglieder (37,38) auf. Die Zahl der Zwischenglieder (37,38) kann alternativ kleiner oder größer sein. In weiterer Abwandlung können einzelne oder alle Zwischenglieder (37,38) in sich drehfest und ohne zusätzliche Achse ausgebildet sein. Die Roboterglieder (35-39) können eine gerade oder gemäß Figur 1 bis 8 abgewinkelte Form haben.

Der taktile Industrieroboter (2) weist die besagte zugeordnete, vorzugsweise integrierte Sensorik (41) zur Erfassung von außen einwirkender mechanischer Belastungen, insbesondere Kräfte und/oder Momente, auf. Die Sensorik (41) ist mit der Robotersteuerung (42) signaltechnisch verbunden. Sie ist vorzugsweise in den Industrieroboter (2), insbesondere in dessen Roboterglieder (35-39) integriert. Sie kann alternativ an anderer Stelle, z.B. an seinem Abtriebselement (40) oder am Prozesswerkzeug angeordnet sein. Die Sensorik (41) kann einen oder mehrere Sensoren, insbesondere Kraftsensoren und/oder Momentensensoren und ggf. Weg- oder Positionssensoren aufweisen.

Die Roboterachsen (I-VII) weisen jeweils ein Achslager, z.B. ein Drehlager bzw. ein Gelenk, und einen hier zugeordneten und integrierten steuerbaren, ggf. regelbaren Achsantrieb, z.B. Drehantrieb, auf. Außerdem können die Roboterachsen (I-VII) eine steuer- oder schaltbare Bremse und die erwähnte ggf. redundante Sensorik (41) zur Detektion von extern einwirkenden mechanischen Belastungen haben. Die in Figur 1 und 8 schematisch angedeutete integrierte Sensorik (41) kann einen oder mehrere Sensoren an jeweils einer oder mehreren Roboterachsen (I-VII) aufweisen. Diese Sensoren können gleiche oder unterschiedliche Funktionen haben. Sie können insbesondere zum Erfassen von Momenten, Drehbewegungen und ggf. Drehpositionen ausgebildet sein.

Der Industrieroboter (2) kann eine oder mehrere nachgiebige Roboterachsen (I-VII) bzw. nachgiebige Achsantriebe mit einer Nachgiebigkeitsregelung haben. Die Nachgiebigkeitsregelung kann eine reine Kraftregelung oder eine Kombination aus einer Positions- und einer Kraftregelung sein. Eine solche nachgiebige Roboterachse (I-VII) ist für die Detektion der im Montageprozess auftretenden Reaktionskräfte und/oder Reaktionsmomente in Verbindung mit der jeweils aktuellen Roboter- oder Achsposition einsetzbar und erlaubt eine prozessgerechte Reaktion auf evtl. Abweichungen der detektierten Werte von
einer Vorgabe.

Die vorgenannte Kraftsteuerung oder Kraftregelung der Roboterachsen (I-VII) bezieht sich auf die Wirkung nach außen am Abtriebselement (40) des Endglieds (39) sowie auf die dort einwirkenden Reaktionskräfte. Roboterintern findet an den drehenden Achsen oder Achsantrieben eine Momentensteuerung oder Momentenregelung statt.

Der taktile Industrieroboter (2) kann verschiedene Betriebsmodi mit unterschiedlichen Steifigkeiten bzw. Nachgiebigkeiten seiner Roboterachsen (I-VII) haben. Dies kann z.B. ein Handführmodus, ein Positionier- oder Suchmodus und ein Steifigkeitsmodus sein. Zwischen den Betriebsmodi kann bedarfsweise umgeschaltet werden. Ein Handführmodus kann z.B. zum Teachen an einer Station, z.B. einer Montageinsel, benutzt werden.

Der bevorzugt taktile Industrieroboter (2) ist für eine Mensch-Roboter-Kooperation oder -Kollaboration (MRK) ausgerüstet. Seine nachgiebige Roboterachse(n) (I-VII) vermeiden Unfälle mit einem Werker und Crashs mit Gegenständen im Arbeitsbereich durch Kraftbegrenzung und ggf. Stillstand oder federndes Ausweichen im Fall unverhergesehener Kollisionen. Der taktile Industrieroboter (2) kann dadurch auch für eine MRK bei einer Teilautomatisierung eingesetzt werden. Der MRKtaugliche Industrieroboter (2) kann einen Berührungskontakt mit dem menschlichen Körper oder anderen Hindernissen detektieren und hierauf reagieren. Er kann dabei z.B. stehen bleiben oder sich ggf. auch von der Kontaktstelle entfernen, insbesondere zurückbewegen. Für die Reaktion auf einen Berührungskontakt kann es unterschiedlich hohe Belastungs- und Reaktionsschwellen geben. Der taktile Industrieroboter (2) kann mit dem Werker in einer MRK-Zone an der Arbeitsvorrichtung (1) ohne Zaun oder andere Maschinengrenze zusammenarbeiten ohne den Werker zu verletzen. Es kann dabei auch zu schmerzfreien Kontakten kommen.

Der dargestellte taktile Industrieroboter (2) kann als Leichtbauroboter ausgebildet sein und aus leichtgewichtigen Materialien, z.B. Leichtmetallen und Kunststoff bestehen. Er hat auch eine kleine Baugröße. Zudem kann er eine niedrige Tragkraft von z.B. 5 bis ca. 20 kg haben. Das in seiner Konstruktion und Funktion vereinfachte Prozesswerkzeug hat ebenfalls ein geringes Gewicht. Der Industrieroboter (2) mit seinem Prozesswerkzeug ist dadurch insgesamt leichtgewichtig und kann ohne größeren Aufwand transportiert und von einem Einsatzort zum anderen verlegt werden. Das Gewicht von Industrieroboter (2) und Prozesswerkzeug kann unter 50 kg, insbesondere bei ca. 30 kg, liegen. Durch die Möglichkeit des manuellen Teachens kann die Arbeitsvorrichtung (1) schnell und einfach programmiert, in Betrieb genommen und an unterschiedliche Prozesse angepasst werden.

Abwandlungen der gezeigten und beschriebenen Ausführungsformen sind in verschiedener Weise möglich. Insbesondere können die Merkmale der verschiedenen Ausführungsbeispiele und der vorgenannten Abwandlungen beliebig miteinander kombiniert, insbesondere auch vertauscht werden.

Eine lineare Stellachse (9,17) kann alternativ als rotatorische Stellachse, z.B. als Schwenkarm, ausgebildet sein.

### BEZUGSZEICHENLISTE

- 1: Arbeitsvorrichtung
- 2: Industrieroboter, Kleinroboter, taktiler Roboter
- 3: Traggestell
- 4: Ständer, Galgen
- 5: Fußteil
- 6: Andockeinrichtung
- 7: Arbeitsplattform
- 8: Sockel
- 9: Stellachse, Hubeinrichtung
- 10: Säule geteilt
- 11: Stellachse, Gelenk, Drehgelenk
- 12: Ansatz
- 13: Ausleger
- 14: Schenkel aufrecht
- 15: Schenkel liegend
- 16: Stellachse, Gelenk, Kippgelenk
- 17: Stellachse, Linerachse
- 18: Anschluss, Montageanschluss
- 19: Arretiereinrichtung
- 20: Erfassungseinrichtung
- 21: Grundkörper, Aufnahmerahmen, Plattform
- 22: Basis
- 23: Arm
- 24: Arm
- 25: Aufnahmeraum
- 26: Staplertasche
- 27: Laufwerk
- 28: Standfuß
- 29: Schnittstelle, Anschlussarm
- 30: Schnittstelle, Anschlussöffnung
- 31: Staplertasche
- 32: Arbeitsplatte
- 33: Unterbau
- 34: Ausrüstung
- 35: Roboterglied, Sockel
- 36: Roboterglied, Basisglied
- 37: Roboterglied, Zwischenglied
- 38: Roboterglied, Zwischenglied
- 39: Roboterglied, Abtriebsglied, Roboterhand
- 40: Abtriebselement
- 41: Sensorik
- 42: Robotersteuerung
- 43: Flanschverbindung
- 44: Versteifung
- 45: Kabelführung
- 46: Stützelement

## Patentansprüche

1. Arbeitsvorrichtung mit einem Traggestell (3) für einen programmierbaren Industrieroboter (2), **dadurch gekennzeichnet, dass** das Traggestell (3) ein Fußteil (5) und einen galgenförmigen und mehrachsig verstellbaren Ständer (4) aufweist.

2. Arbeitsvorrichtung nach Anspruch 1, **dadurch gekennzeichnet, dass** der Ständer (4) einen auf dem Fußteil (5) angeordneten Sockel (8), eine aufrechte Säule (10) und einen geraden oder abgewinkelten Ausleger (13) am oberen Säulenende aufweist, die beweglich und mit Stellachsen (9,11,16,17) miteinander verbunden sind.

3. Arbeitsvorrichtung nach Anspruch 1 oder 2, **dadurch gekennzeichnet, dass** der Ständer (4), insbesondere der Ausleger (13), einen Anschluss (18) für die bevorzugt hängende Montage eines Industrieroboters (2) aufweist.

4. Arbeitsvorrichtung nach Anspruch 1, 2 oder 3, **dadurch gekennzeichnet, dass** der Ständer (4) lineare und/oder rotatorische Stellachsen (9,11,16,17) aufweist, die manuell und/oder durch einen steuerbaren Stellantrieb betätigbar sind und eine Arretiereinrichtung (19) aufweisen.

5. Arbeitsvorrichtung nach einem der vorhergehenden Ansprüche, **dadurch gekennzeichnet, dass** der Ständer (4) zwei lineare Stellachsen (9,17) und eine oder zwei rotatorische Stellachsen (11,16) aufweist.

6. Arbeitsvorrichtung nach einem der vorhergehenden Ansprüche, **dadurch gekennzeichnet, dass** der Sockel (8) und die aufrechte Säule (10) höhenverstellbar miteinander verbunden sind und/oder die Säule (10) und der Ausleger (13) starr oder um eine Querachse schwenkbar miteinander verbunden sind.

7. Arbeitsvorrichtung nach einem der vorhergehenden Ansprüche, **dadurch gekennzeichnet, dass** die aufrechte Säule (10) geteilt ausgebildet ist, wobei ein die Stellachse (11) bildendes Drehgelenk oder eine Flanschverbindung (43) zwischen den Säulenteilen angeordnet ist.

8. Arbeitsvorrichtung nach einem der vorhergehenden Ansprüche, **dadurch gekennzeichnet, dass** der Ausleger (13) einen liegenden Schenkel (15) aufweist, der über eine lineare Stellachse (17) mit dem Anschluss (18) für den Industrieroboter (2) verbunden ist.

9. Arbeitsvorrichtung nach einem der vorhergehenden Ansprüche, **dadurch gekennzeichnet, dass** die Arbeitsvorrichtung (1), insbesondere das Fußteil (5), eine Andockeinrichtung (6) aufweist, die für eine vorzugsweise formschlüssige Aufnahme einer Arbeitsplattform (7) ausgebildet ist.

10. Arbeitsvorrichtung nach einem der vorhergehenden Ansprüche, **dadurch gekennzeichnet, dass** das Fußteil (5) einen verstellbaren, insbesondere ausziehbaren oder ausschwenkbaren, Standfuß (28) und/oder ein verstellbares, insbesondere einfahrbares, Laufwerk (27) aufweist.

11. Arbeitsvorrichtung nach einem der vorhergehenden Ansprüche, **dadurch gekennzeichnet, dass** das Fußteil (5) einen als U-förmiger Aufnahmerahmen oder als Plattform ausgebildeten Grundkörper (21) aufweist, auf dem der Sockel (8) angeordnet ist.

12. Arbeitsvorrichtung nach einem der vorhergehenden Ansprüche, **dadurch gekennzeichnet, dass** der Sockel (8) eine seitliche Versteifung, bevorzugt mit einer integrierten Schwingungsdämpfung, aufweist.

13. Arbeitsvorrichtung nach einem der vorhergehenden Ansprüche, **dadurch gekennzeichnet, dass** die Arbeitsvorrichtung (1) einen mehrachsigen, bevorzugt taktilen Industrieroboter (2) und ggf. eine andockbare Arbeitsplattform (7) aufweist.

14. Arbeitsvorrichtung nach einem der vorhergehenden Ansprüche, **dadurch gekennzeichnet, dass** die Arbeitsplattform (7) und/oder das Fußteil (5) Staplertaschen (31) aufweisen.

15. Verfahren zur Durchführung von Arbeitsprozessen mittels einer Arbeitsvorrichtung (1), die ein Traggestell (3) für einen programmierbaren Industrieroboter (2) aufweist, **dadurch gekennzeichnet, dass** das Traggestell (3) ein Fußteil (5) und einen galgenförmigen und mehrachsig verstellbaren Ständer (4) aufweist.
